Europäisches Patentamt

**European Patent Office**

Office européen des brevets

(19)

(11) Veröffentlichungsnummer: **0 025 081**
**B1**

(12)

# EUROPÄISCHE PATENTSCHRIFT

(45) Veröffentlichungstag der Patentschrift:
28.09.83

(51) Int. Cl.³: **G 05 B 19/23, H 02 P 8/00**

(21) Anmeldenummer: **80102564.4**

(22) Anmeldetag: **09.05.80**

(54) **Quantisierte Geschwindigkeitssteuerung eines Schrittmotors.**

(30) Priorität: **05.09.79 DE 2935800**

(43) Veröffentlichungstag der Anmeldung:
**18.03.81 Patentblatt 81/11**

(45) Bekanntmachung des Hinweises auf die Patenterteilung:
**28.09.83 Patentblatt 83/39**

(84) Benannte Vertragsstaaten:
**DE FR GB**

(56) Entgegenhaltungen:
**DE-A-2 119 352**
**DE-A-2 249 757**
**DE-A-2 421 219**
**DE-A-2 556 015**
**FR-A-2 127 701**
**FR-A-2 316 781**
**US-A-3 694 725**
**US-A-4 158 800**

(73) Patentinhaber: **International Business Machines Corporation, Old Orchard Road, Armonk, N.Y. 10504 (US)**

(72) Erfinder: **Burckhardt, Karl-Heinz, Fuldastrasse 11, D-7033 Herrenberg (DE)**
Erfinder: **Bahr, Dietrich Jürgen, Dr., Rheinstrasse 49, D-7033 Herrenberg 1 (DE)**

(74) Vertreter: **Blutke, Klaus, Dipl.-Ing., Schönaicher Strasse 220, D-7030 Böblingen (DE)**

Quantisierte Geschwindigkeitssteuerung eines Schrittmotors

Die Erfindung betrifft ein Verfahren zur quantisierten Geschwindigkeitssteuerung eines Schrittmotors sowie eine Anordnung zur Durchführung dieses Verfahrens.

Das erfindungsgemäße Verfahren und die erfindungsgemäße Anordnung sollen insbesondere zur Geschwindigkeitssteuerung von Schrittmotoren für den Antrieb des Schreibkopfes von Metallpapierdruckern Anwendung finden.

Aus der DE-A-2 556 015.0 (US-Priorität vom 23. 12. 1974, Aktenzeichen 535 647) ist eine Steuerschaltung für einen schrittmotorgetriebenen Schlitten eines Druckers beschrieben, bei der die einem vorbestimmten Geschwindigkeitsprofil entsprechenden Fortschaltimpulsfolgen aus einem Festwertspeicher abrufbar sind.

In der DE-C-2 119 352 (US-Priorität vom 22. 04. 1970, Aktenzeichen 30 754) ist ein Verfahren zur Steuerung eines Schrittmotors beschrieben, bei dem nach Inbetriebsetzen des Motors durch einen Startimpuls die von einer auf der Motorwelle befestigten Codierscheibe bei jedem Schritt erzeugten Impulse die Motorsteuerung fortschalten, wonach zur Beschleunigung des Motors von einer niedrigen auf eine höhere Geschwindigkeit einmalig zwischen zwei Schrittimpulsen ein zusätzlicher Impuls auf die Motorsteuerung gegeben wird und wonach zur Verzögerung des Motors von der hohen auf die niedrigere Geschwindigkeit einmalig ein Schrittimpuls unterdrückt wird.

Des weiteren ist in der DE-C-2 421 219 ein Verfahren zur Steuerung eines Schrittmotors angegeben, bei dem nach Inbetriebsetzen des Motors durch einen Start-Motorfortschaltimpuls von der Motorstellung abhängige Rückmeldeimpulse zur Motorsteuerung verwendet werden. Dieses Verfahren ist dadurch gekennzeichnet, daß die Motorfortschaltimpulse von vorhergehenden Rückmeldeimpulsen ausgelöst nach Ablauf einer bestimmten Verzögerungszeit abgegeben werden, wobei diese Verzögerungszeit dem Polradwinkelwert entspricht, welcher der jeweils erreichten Geschwindigkeit der Schrittanzahl sowie dem optimalen Drehmoment zugeordnet ist.

Aus dem IBM Technical Disclosure Bulletin Vol. 21, Nr. 4, September 1978 ist es bekannt, für die Positionssteuerung eines Metallpapierdruckers eine Codierscheibe zu verwenden. Diese Codierscheibe trägt an ihrem Umfang eine Vielzahl von äquidistanten Markierungen, welche bei Drehung (des mit ihr verbundenen Schrittmotors) photoelektrisch abgetastet werden, um Druckpulse zu erzeugen. Auf diese Weise wird eine von der Motorgeschwindigkeit unabhängige Synchronisation zu den Druckpositionen entlang einer Zeile hergestellt.

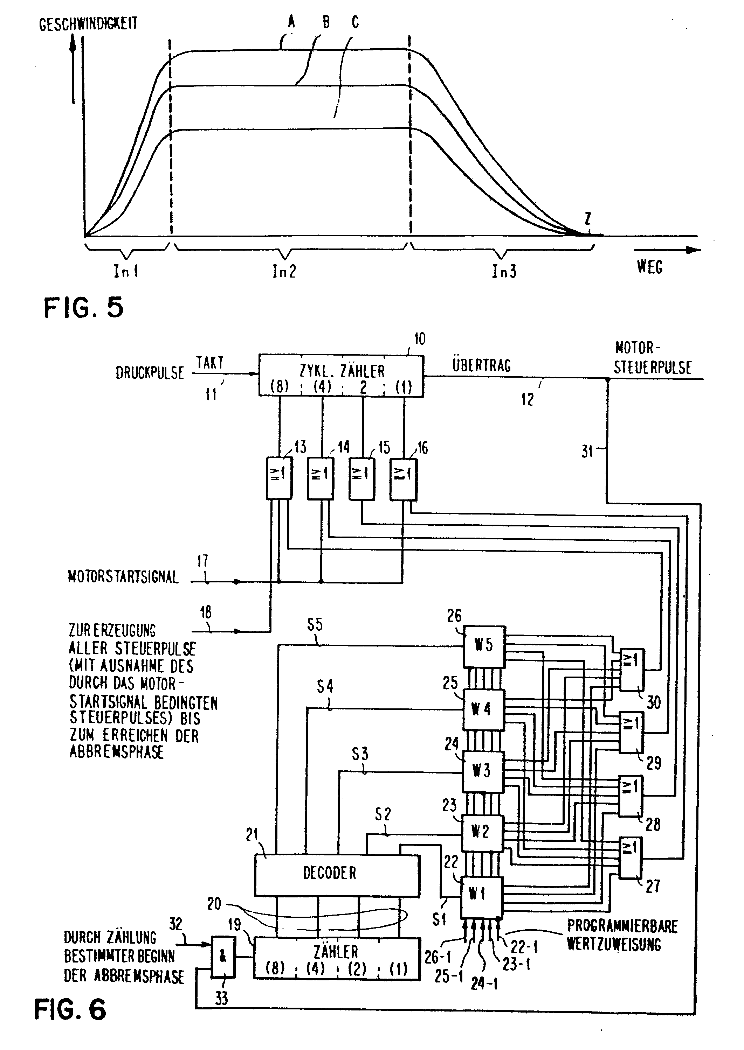

Während des Schreibvorganges für eine Zeile z. B. weist der schrittmotorgetriebene Schreibkopf eines Metallpapierdruckers ein bestimmtes Geschwindigkeitsprofil auf. Dieses Geschwindigkeitsprofil (siehe Fig. 5) ist durch eine Anlaufphase (ln1) zu Beginn der Druckzeile, eine Gleichlaufphase (ln2) mit annähernd gleichbleibender Geschwindigkeit und eine Abbremsphase (ln3) am Ende der Druckzeile gekennzeichnet.

Nach der FR-A-2 127 701 werden zur Geschwindigkeitssteuerung (Bremsung bzw. Beschleunigung) von Schrittmotoren die von einer Positions-Kodierscheibe stammenden Abtastsignale durch einen monostabilen Multivibrator verzögert und zur Fortschaltung des Schrittmotors benutzt. Geschwindigkeitsschwankungen des Motors während dieser Verzögerungszeit bleiben jedoch unberücksichtigt, so daß die Fortschaltungspulse bei Geschwindigkeitsschwankungen nicht kodier-scheibenwinkelstarr sind.

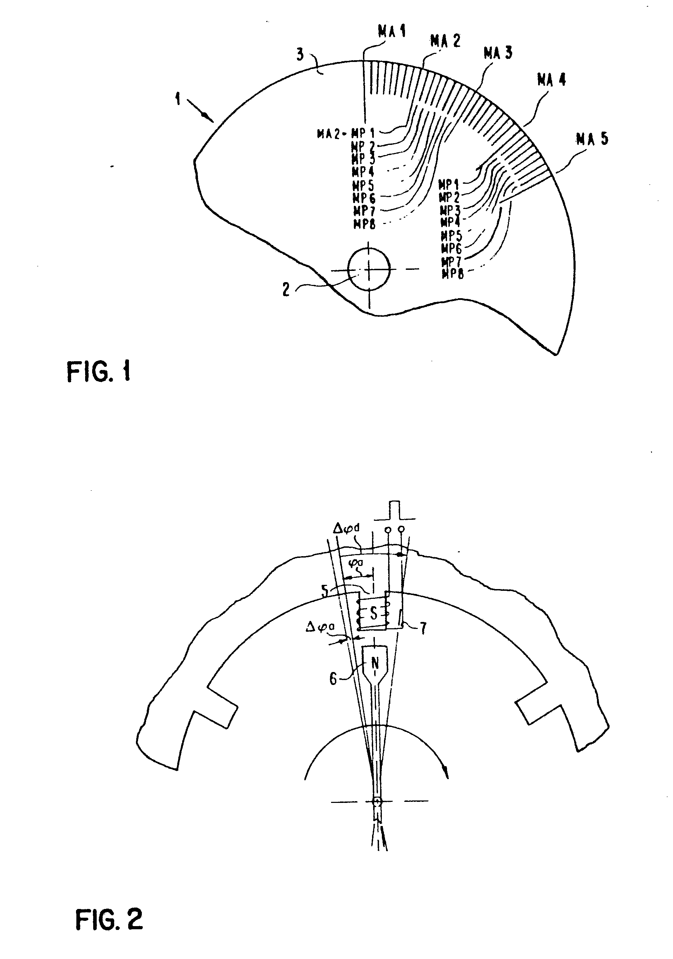

In dem Bestreben, das Beschleunigungs- bzw. Abbremsverhalten des Motors zu optimieren, wurde z. B. zur Erzeugung eines günstigen Abbremsverhaltens der Schrittmotor mit abbremsend wirkenden Impulsen beaufschlagt. Diese Abbremspulse stellten verzögerte Standardsteuerpulse dar. Die Verzögerungszeit bestimmte die Größe des sogenannten Abbremsphasenwinkels, auf den in Zusammenhang mit Fig. 2 noch näher eingegangen wird. Da jedoch die Zeitverzögerung immer einen gleichbleibenden Wert einnahm, war damit folgender Nachteil verbunden:

Beim Auftreten etwaiger Geschwindigkeitsschwankungen des Schrittmotors (z. B. durch Lastschwankungen und Temperatureinflüsse bedingt) innerhalb dieser Verzögerungszeit zur Ableitung des Abbremspulses konnten sich unterschiedliche Abbremsphasenwinkel ergeben. Damit waren jedoch keine gleichbleibenden Abbremsverhältnisse bedingt. In Praxi würde das bedeuten, daß sich der Endpunkt Z des Geschwindigkeitsprofiles (siehe Fig. 5) für mehrmalige Zeilendruckvorgänge entlang der Horizontalachse verschieben würde. Ein Auswandern dieses Punktes — hervorgerufen durch ein ungünstiges, zum Schwingen des Motors führendes Abbremsverhalten — bedeutete jedoch, daß beim Rücklauf des Schreibkopfes bei einer bestimmten, die Zeilenlänge bestimmenden Anzahl vor Positionspulsen nicht mehr der ursprüngliche Zeilenstartpunkt eingehalten würde.

Dieser zuvor beschriebene Nachteil hat sich bei Metallpapierdruckern mit relativ niederen Geschwindigkeiten nicht oder nur wenig ausgewirkt. Mit zunehmender Schreibgeschwindigkeit und mit zunehmendem Druckauflösungsvermögen ist jedoch eine Ableitung des Abbremspulses aus dem Standardsteuerpuls mittels einer elektronischen Zeitverzögerungsschaltung nicht mehr tragbar.

Es ist deshalb Aufgabe der Erfindung, eine Möglichkeit vorzusehen, welche die Erzeugung eines beschleunigend oder abbremsend wirkenden Impulses bei bestimmten Winkelstellungen des Schrittmotors (gemeint sind die Winkelstellungen vom Rotor zum Stator) sicherstellt. Darüber hinaus ist es Aufgabe der Erfindung, Möglichkeiten zur quantisierten Geschwindigkeitssteuerung eines Schrittmotors anzugeben.

Diese Aufgabe der Erfindung wird in vorteilhafter Weise durch die im kennzeichnenden Teil der Ansprüche 1 und 5 angegebenen Maßnahmen gelöst.

Vorteilhafte Weiterbildungen der Erfindung sind den Unteransprüchen zu entnehmen.

Ausführungsbeispiele der Erfindung sind in den Zeichnungen dargestellt und werden im folgenden näher beschrieben.

Es zeigt

Fig. 1 eine schematische Darstellung einer Codierscheibe mit Markierungen für die Erzeugung von Schrittmotorstandardsteuerpulsen und Druckpulsen,

Fig. 2 eine auszugsweise schematische Darstellung eines Schrittmotors unter Darstellung von einem Standardphasenwinkel $\varphi a$ für einen Standardsteuerpuls und unter Darstellung eines Beschleunigungs-$\Delta\varphi a$ und eines Abbremsphasenwinkels $\Delta\varphi d$ für den Beschleunigungs- bzw. Abbremspuls,

Fig. 3A bis 3C schematische Darstellungen von Impulsdiagrammen zur Ableitung eines Abbremspulses,

Fig. 4A bis 4B schematische Darstellung von Impulsdiagrammen zur Ableitung eines Abbremspulses von den für Ableitung der Druckpulse maßgebenden Markierungen auf der Codierscheibe,

Fig. 5 eine schematische Darstellung verschiedener Geschwindigkeitsprofile,

Fig. 6 ein Blockschaltbild einer Anordnung zur Erzeugung von Schrittmotorsteuerpulsen bei bestimmten vorgegebenen Winkelstellungen.

In Fig. 1 ist eine schematische Darstellung einer Codierscheibe mit Markierungen für die Erzeugung von Schrittmotorsteuerpulsen gezeigt. Diese Codierscheibe 1 sitzt mit ihrem Achsloch 2 auf der Achse eines Schrittmotors, durch welchen der Schreibkopf eines Metallpapierdruckers (nicht dargestellt) angetrieben wird. Der Schreibkopf soll sich zeilenweise über den Aufzeichnungsträger bewegen. Bei einer Bewegung des Motors werden unter anderem von einer photoelektronischen Einrichtung (nicht dargestellt) die Markierungen MA1, MA2, MA3 etc. zur Ableitung der Motorstandardsteuerpulse abgetastet. Diese und die zwischen ihnen liegenden Markierungen (jeweils MP2 bis MP8) dienen der Ableitung der Druckpulse. Es sind auch Ausführungsformen mit einer anderen Anzahl von Druckpulsen innerhalb eines Motorschrittzyklus möglich. Durch die Kopplung des Schrittmotors mit dem Schreibkopf ergibt sich somit eine geschwindigkeitsunabhängige Synchronisation zu den einzelnen Druckpositionen entlang der Druckzeile. Eine solche Synchronisation ist ohnehin erforderlich, da der Geschwindigkeitsverlauf des Schreibkopfes in einer Zeile unterschiedlich ist. Dieser Geschwindigkeitsverlauf ist durch eine Anlaufphase, einen Bereich möglichst gleichförmiger Geschwindigkeit (Gleichlaufphase) und eine Abbremsphase am Ende der Druckzeile gekennzeichnet.

Der Antrieb des Motors (siehe auch Fig. 2) erfolgt grundsätzlich durch Standardsteuerpulse bei bestimmten Stellungen des Rotors gegenüber dem Stator. Für eine bestimmte Motorgeschwindigkeit wird der Steuerimpuls bei einer bestimmten (von der Geschwindigkeit abhängenden) Winkelstellung erteilt. Die Winkelstellungen für unterschiedliche Geschwindigkeitswerte sind ebenfalls unterschiedlich. Es wird vorausgesetzt, daß für eine Geschwindigkeitssteuerung des Schrittmotors die Winkelwerte im System verfügbar sind; sie können empirisch bestimmt worden sein oder auch über einen Algorithmus ermittelt werden.

Als Beispiel sei angenommen, daß ein solcher Standardsteuerpuls auf die Spule 7 des Statorpoles 5 zu einem Zeitpunkt gegeben wird, wenn der Rotor 6 zum Statorpol 5 den Winkel $\varphi a$ einnimmt. Dieser Winkel soll zur Einhaltung einer bestimmten Geschwindigkeit erforderlich sein. Die Drehrichtung des Rotors im Uhrzeigersinn entspricht der angegebenen Pfeilrichtung. Träte ein Steuerpuls bereits bei der Winkelstellung $\varphi a + \Delta\varphi a$ auf, so ergäbe sich durch eine vorzeitige anziehende Wirkung des Rotorpoles (Nord) zum Statorpol (Süd) — durch den Beschleunigungsphasenwinkel $\varphi\Delta a$ bedingt — eine Beschleunigung des Motors. Auf diese Weise kann durch verfrühte oder verzögerte Steuerpulse (bezogen auf Standardsteuerpulse entsprechender Winkellage) das Geschwindigkeitsverhalten des Schrittmotors beeinflußt werden.

Würde der Standardsteuerpuls der Winkelstellung $\varphi a$ um beispielsweise $\Delta\varphi d$ verzögert werden, so ergäbe sich eine Abbremsung. Diese Abbremsung wirkt sich besonders stark aus, wenn $\Delta\varphi d$ in den Bereich rechts des Statorpoles 5 reichte, weil dann sein Südpol und der Nordpol des Rotors 6 entgegen der Drehrichtung des Motors eine anziehende Wirkung aufeinander ausüben würden.

Eine Geschwindigkeitsbeeinflussung im Sinne einer Abbremsung wurde früher durch eine Zeitverzögerung des Standardsteuerpulses erreicht. Diese Zeitverzögerung hatte jedoch einen ganz bestimmten Wert TD. Diese Verzögerungszeit TD war so bemessen, daß sie den erwünschten Abbremsphasenwinkel $\Delta\varphi d$ entsprechen sollte.

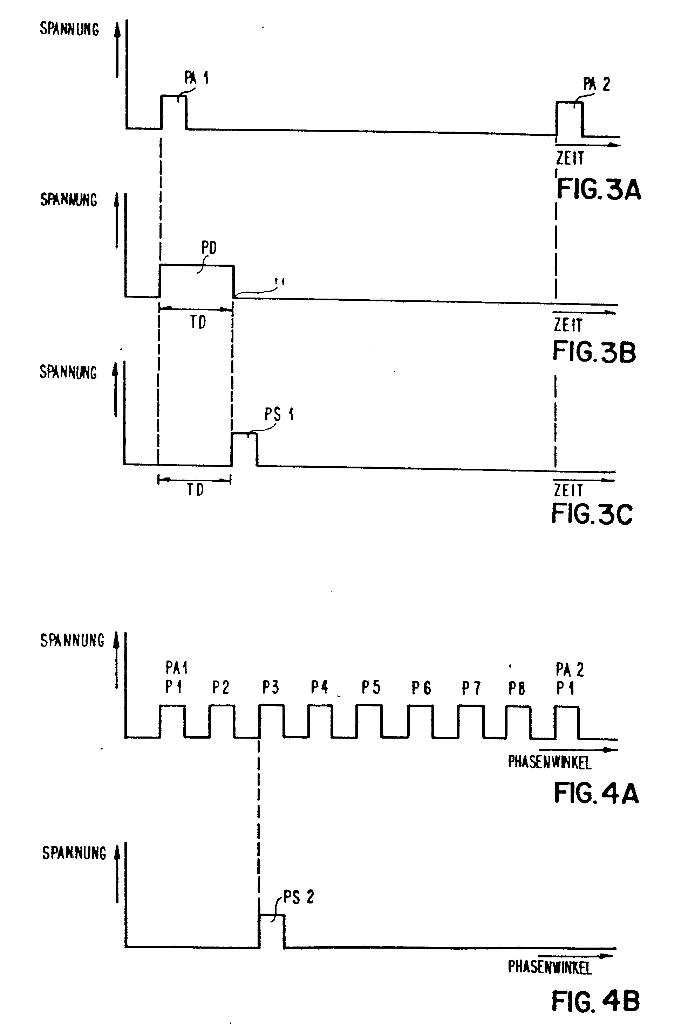

Zur näheren Erläuterung sei auf die Darstellung der Impulsdiagramme in den Fig. 3A bis 3C verwiesen.

In Fig. 3 sind zwei zeitlich voneinander getrennte Schrittmotorstandardsteuerpulse PA1 und PA2 gezeigt. Diese Impulse sollen zu Zeitpunkten auftreten, an denen die Markierungen MA1 und MA2 der Codierscheibe abgetastet werden. Um ausgehend von dem Impuls PA1, einen entsprechenden Abbremspuls PS1 (siehe Fig. 3C) zu erzeugen, wäre es vorstellbar, daß der Puls PA1 auf eine monostabile Kippschaltung (nicht dargestellt) mit der Verzögerungszeit TD gegeben wird (siehe Fig. 3B). Nach Ablauf dieser Verzögerungszeit TD wird über die Rückflanke des Kippschaltungsausgangssignales PD zum Zeitpunkt t1 der Abbremspuls PS1 erzeugt und zum Abbremsen des Schrittmotors verwendet.

Die durch die monostabile Kippschaltung bewirkte Verzögerungszeit TD ist konstant. Der Umstand, daß das Auftreten des Abbremspulses PS1 allein durch den Ablauf der Zeit TD bestimmt wird, berücksichtigt jedoch nicht Geschwindigkeitsschwankungen des Rotors innerhalb dieser Zeit. Solche Geschwindigkeitsschwankungen können durch Lastschwankungen oder durch Temperatureinflüsse auf die elektronischen Schaltkreise bedingt sein. Beim Auftreten dieser Geschwindigkeitsschwankungen ist jedoch durch die gleichbleibende Verzögerungszeit TD ein fester, gleichbleibender Abbremsphasenwinkel $\Delta\varphi$d nicht mehr gewährleistet. Eine Änderung dieses Winkels bedeutet aber ein Abweichen von einem optimalen Abbremsverhalten. Derartige Abweichungen wirken sich besonders kritisch bei Metallpapierdruckern mit hoher Druckgeschwindigkeit bzw. sehr hohem Druckauflösungsvermögen aus.

Aus diesem Grunde versagt bei derartigen Anwendungen eine Einflußnahme auf das Geschwindigkeitsprofil des Schrittmotors mit Hilfe gleichbleibender Zeitverzögerungen von entsprechenden Standardsteuerpulsen. Würde dieses Prinzip beibehalten, käme es zu Schwingungen des Motors und zu Verschiebungen des gesamten Geschwindigkeitsprofiles entlang der Druckzeile und damit zu einem schlechten Druckbild. Beim Rücksetzen des Schreibkopfes um eine entsprechende Zahl von Druckpositionen — durch elektronische Zählung ermittelt — läge der Startbeginn für die nächste Zeile an einem anderen Punkt als zuvor.

Zur Vermeidung dieses Nachteils werden nunmehr die Abbremssteuerpulse direkt von der Codierscheibe abgeleitet, um eine exakte Einhaltung des optimalen Abbremsphasenwinkels (z. B. $\Delta\varphi$d in Fig. 2) zu gewährleisten. Hierzu sind auf der Codierscheibe (Fig. 1) zwischen die Markierungen MA1, MA2, MA3 etc. zur Ableitung der Standardsteuerpulse weitere Markierungen (jeweils MP2 bis MP8) zur Ableitung der Druckpulse angebracht. Alle Markierungen werden von einer nicht dargestellten photoelektronischen Abtastvorrichtung abgefühlt. Dadurch werden Impulsfolgen, wie sie in Abbildung 4A dargestellt sind, erzeugt: Jeder Standardmotorschrittzyklus (beginnend bei z. B. PA1 oder PA2 etc.) umfaßt eine Anzahl von insgesamt 8 Druckpulsen P1 bis P8. Der erste Druckpuls P1 jedes Zyklus ist mit dem Standardsteuerpuls PA1 (PA2 etc) dieses Zyklus identisch. Das Auftreten der Druckpulse ist an feste Phasenwinkelstellungen des Schrittmotors geknüpft. Die Abstufung dieser Winkelstellungen hängt von der Anzahl der Druckpulse in einem Motorschrittzyklus ab.

Es wird davon ausgegangen, daß eine Abstufung vorliegt, wie sie für eine optimale Beeinflussung des Geschwindigkeitsprofils des Motors erforderlich ist.

Es ist denkbar, daß der optimale Abbremsphasenwinkel $\Delta\varphi$d gemäß Fig. 2 dann vorliegt, wenn die zweite Markierung MP3 (nach MA1 oder MA2 oder MA3 etc.), durch welche der Puls P3 in Fig. 4A bedingt ist, die Abtaststation gerade passiert. Das Auftreten des Pulses P3 ist gemäß der Darstellung in Fig. 4B mit dem Abbremspuls PS2 identisch. Dadurch ist gewährleistet, daß trotz aller möglichen Geschwindigkeitsschwankungen des Motors innerhalb des Bereiches des Abbremsphasenwinkels $\Delta\varphi$d der Abbremspuls PS2 genau zu der Zeit auftritt, zu der der Rotor den Abbremsphasenwinkel $\Delta\varphi$d einnimmt (bezogen auf den Winkel $\varphi$a des Standardsteuerpulses). Damit ist nunmehr die Möglichkeit des Auswanderns des Geschwindigkeitsprofiles des Motors entlang einer Druckzeile ausgeschlossen.

Für eine optimale Abbremsphase soll kein Überschwingen des Motors nach Erreichen der »Stop«-Position erfolgen. Für ein optimales Abbremsverhalten werden die Abbremspulse in Abweichung zu den für die verschiedenen Geschwindigkeiten vorliegenden Winkelwerten als $\Delta\varphi$-Werte vorgegeben. Angenommen, die optimale Abbremsphase soll sich über 5 Motorschritte erstrecken. Während der einzelnen Schritte würde der Motor unterschiedliche Durchschnittsgeschwindigkeiten V1, V2, V3, V4 und V5 einnehmen. Für jeden dieser Schritte sei ein Abbremsphasenwinkel $\Delta\varphi$1, $\Delta\varphi$2, $\Delta\varphi$3, $\Delta\varphi$4 und $\Delta\varphi$5 vorgegeben. Diese Abbremsphasenwinkel können empirisch ermittelt oder algorithmisch bestimmt werden. Werden die Abbremspulse während der 5 Abbremsschritte unter Berücksichtigung der $\Delta\varphi$-Werte erteilt, kommt es zu einem optimalen Abbremsverhalten des Motors. Dieses optimale Abbremsverhalten wäre nicht gewährleistet, wenn z. B. andere Abbremsphasenwinkel vorgegeben würden, die die Geschwindigkeitskurve z. B. schneller auf den Wert 0 führen würden, was jedoch anschließend mit einem unerwünschten Schwingen des Motors verknüpft wäre.

In Fig. 6 ist ein Blockschaltbild einer Schaltung zur Erzeugung des Schrittmotorsteuerpulses zur Erzeugung eines optimalen Abbremsverhaltens gezeigt. Es wird davon ausgegangen, daß

1.  ein Motorschritt 8 Druckpulse P1 bis P8 umfaßt (andere Zuordnungen für andere Ausführungsbeispiele sind denkbar), und
2.  daß eine optimale Abbremsung des Schrittmotors im Verlaufe von 5 Motorschritten erfolgen soll (andere Schrittzahlen sind ebenfalls denkbar).

Entsprechend den genannten 8 Druckpulsen pro Motorschritt sieht die Schaltung gemäß Fig. 6 einen zyklischen programmierbaren Binärzähler 10 mit 4 Stufen vor. Dieser Zähler 10 ist taktgetrieben. Als Takt werden auf Leitung 11 die Druckpulse verwendet, welche von den Markierungen MP1 bis MP8 der Codierscheibe abgeleitet sind. Die auf der Übertragsleitung 12 des Zählers 10 auftretenden Impulse werden als Motorsteuerpulse verwendet. Um zu erreichen, daß die Motorsteuerpulse zu Zeitpunkten vorgegeben werden, die von den abgefühlten Markierungen MA1, MA2, MA3 usw. auf der Codierscheibe abweichen, wird folgendermaßen verfahren:

Die Markierungen MA1, MA2, MA3 usw. und die zwischen ihnen liegenden Markierungen MP2 bis MP8 dienen zur Ableitung der Druckpulse P1 bis P8 für jeden Motorschritt. Durch diese Durckpulse wird der Zähler 10 taktgetrieben. Möchte man erreichen, daß ein Motorsteuerpuls nicht zum Zeitpunkt einer abgefühlten Markierung, z. B. MA1 oder MA2 auftritt, sondern z. B. zwei Druckpulse später, so muß Zähler 10 vor Beginn des bei MA1 einsetzenden Zählvorganges mit einem entsprechenden Anfangswert geladen werden. Dieser Anfangswert muß so groß sein, daß der Zähler 10 nach Empfangen zweier Druckpulse auf der Taktleitung 11 überläuft und auf der Übertragsleitung 12 einen Motorsteuerpuls abgibt. Für den vierstufigen Binärzähler 10 müßte dieser Anfangswert demnach dem Dezimalwert 13 (Binär 1101) betragen. Die Anfangswertzuweisung für den Zähler 10 erfolgt über die ODER-Glieder 13, 14, 15 und 16, die jeweils mit einer Stufe des Binärzählers 10 verbunden sind.

Die zuvor gegebene Darstellung dient einem einfacheren Verstehen der Wirkungsweise der Schaltung.

In Praxi wird der Schrittmotor durch ein sogenanntes Motorstartsignal, das auch über die Leitung 17 der Schaltung nach Fig. 6 zugeführt wird, gestartet. Durch dieses Startsignal bedingt, beginnen sich Motor und die mit ihm verbundene Codierscheibe zu drehen. Dabei werden die Markierungen MP1, MP2 etc. abgetastet. Mit dem Auftreten des Startsignals soll auch die Markierung MA1 auf der Codierscheibe definiert sein — alle weiteren Markierungen MA2, MA3, etc. sind somit durch »Achter«-Zählung (beginnend bei MA1 = MP1 = 1, MP2 = 2, MP3 = 3, etc. bis MP8 = 8 für den ersten Zählzyklus bzw. Motorschritt, fortfahrend mit MA2 = MP1 = 1, MP2 = 2, etc. für den darauffolgenden Motorschritt) festgelegt.

Zur Erzeugung des auf das Startsignal folgenden Motorsteuerpulses wird die Leitung 17, welche mit den ODER-Gliedern 13, 14 und 16 verbunden ist, aktiviert. Diese ODER-Glieder setzen daraufhin durch ihr Ausgangssignal die entsprechenden Binärstufen des Zählers 10.

Es sei bemerkt, daß für eine andere Wertzuweisung — wenn z. B. das Auftreten des Motorsteuerpulses nicht durch den zweiten, sondern möglicherweise durch einen anderen Druckpuls innerhalb eines Motorschrittes bestimmt werden soll — die Leitung 17 mit einer anderen Kombination von ODER-Gliedern zu verbinden ist. Es sei darauf hingewiesen, daß die Motorsteuerpulse immer zum Zeitpunkt des zweiten Druckpulses innerhalb eines Motorschrittes während der Anlauf- und Gleichlaufphase auftreten sollen. Da ein Motorschritt insgesamt 8 Druckpulse umfaßt, muß durch eine schaltungstechnische Maßnahme sichergestellt werden, daß alle auf den ersten Motorsteuerpuls (der zum Zeitpunkt des zweiten Druckpulses erzeugt wurde) folgenden Motorsteuerpulse jeweils 8 Druckpulse später als der vorausgehende Motorsteuerpuls erzeugt werden. Zu diesem Zweck wird zur Erreichung aller weiterer Motorsteuerpulse für die Anlauf- und Gleichlaufphase des Motors bis zum Erreichen der Abbremsphase die Leitung 18 aktiviert, welche mit dem ODER-Glied 13 verbunden ist. Dieses ODER-Glied 13 beaufschlagt jeweils zu Beginn eines Zählzyklus über seine Ausgangsleitung die mit (8) gekennzeichnete Stufe höchster Wertigkeit des Binärzählers 10. Auf diese Weise wird nach Erzeugen des ersten Motorsteuerpulses in den Zähler 10 der Anfangswert 8 gestellt, so daß der Zähler nach 8 weiteren, als Takt fungierenden Druckpulsen auf seiner Übertragsleitung 12 einen neuen Motorsteuerpuls abgibt. Dieser neue Motorsteuerpuls tritt gemäß dem vorhergesagten um 8 Druckpulse später auf als der vorausgehende Motorsteuerpuls.

Bei Erreichen der Abbremsphase wird die Anfangswertzuweisung für den Zähler 10 für jeden gedachten Bewegungsschritt des Motors in besonderer Weise vorgenommen. Im Falle des vorliegenden Ausführungsbeispieles sei — wie bereits erwähnt — davon ausgegangen, daß die Abbremsphase insgesamt 5 Motorschritte umfassen soll. Für jeden Motorschritt soll der Motorsteuerpuls während des Auftretens eines ganz bestimmten Druckpulses innerhalb eines Motorschrittes erzeugt werden.

So ist es z. B. denkbar, daß der Motorsteuerpuls für den ersten Schritt während des ersten Druckpulses, für den zweiten Schritt während des vierten Druckpulses, für den dritten Schritt während des zweiten Druckpulses, für den vierten Schritt während des vierten Druckpulses und während des letzten und fünften Schrittes während des dritten Druckpulses auftreten soll. Diese Werte, durch die eine optimale Abbremsung des Motors nach fünf Schritten zum absoluten Motorstillstand ohne Schwingverhalten erfolgen soll, können entweder algorithmisch (durch eine entsprechende Programmberechnung) vorgegeben werden oder zuvor experimentell bestimmt und programmgemäß angespeichert worden sein. Auf diese Werte wird zurückgegriffen, wenn während der Abbremsphase des Zählers 10 für jeden gedachten Motorschritt vor Beginn des eigentlichen Zählvorganges mit einem entsprechenden Anfangswert geladen wird. Dieser Ausgangswert muß wieder sicherstellen, daß auf der Übertragsleitung 12 des Zählers 10 die Motorsteuerpulse zu den gewünschten Druckpulszeiten auftreten. Mit dem Auftreten des letzten Motorsteuerpulses während der sogenannten Gleichlaufphase des Motors wird für die folgenden fünf gedachten Motorschritte der Abbremsphase für jeden Zählzyklus eine entsprechende Anfangswertzuweisung für den Zähler 10 vorgenommen. Die Abbremsphase wird durch ein Signal auf Leitung 32 angezeigt. Dieses Signal folgt aus der Zählung der einzelnen Motorschritte für die Anlauf- und Gleichlaufphase. Es wird einem UND-Glied 33 zugeführt, dessen zweiter Eingang mit der Übertragsleitung des Zählers 10 verbunden ist. Über den Ausgang des UND-Gliedes 33 wird der vierstufige Binärzähler 19 beaufschlagt. Die Ausgänge der einzelnen Zählerstufen dieses Zählers sind über Leitungen 20 mit einem Decoder 21 verbunden. Dieser Decoder hat entsprechend den fünf vorgegebenen Motorschritten für die Abbremsphase fünf Ausgangsleitungen S1 bis S5, die jeweils mit einer Schaltung W1 bis W5 (22 bis 26) für eine Wertzuweisung verbunden sind. Diese Schaltungen W1 bis W5 können entweder eine festverdrahtete Wertzuweisung bewirken; es ist aber auch möglich, diese Schaltung so auszulegen, daß eine programmierbare Wertzuweisung erfolgt. Der schaltungstechnische Aufbau einer solchen programmierbaren Wertzuweisungsschaltung stellt keine Besonderheit dar und wird deshalb auch nicht näher beschrieben. Die Wertzuweisungsschaltung W1 (22) ist mit einer Steuerleitung 22-1 verbunden, auf welcher diese Schaltung eine entsprechende Wertzuweisung erhält (eine binäre Wertzuweisung würde sich auf »setzen« oder »nicht setzen« eines binären Zustandes beschränken. Es sei auch angedeutet, daß bei einer über einen einfachen Binärzustand hinausgehende Wertzuweisung, die Wertzuweisungsschaltung aus mehreren binär gewichteten Stufen besteht, von denen jede für sich ansteuerbar ist). Entsprechend sind die anderen Schaltungen 23 bis 26 mit den Wertzuweisungsschaltungen 23-1 bis 26-1 verbunden. Der durch alle Schaltungen W1 bis W5 zuzuweisende Wert (gleich Anfangswert für den Zähler 10) ist durch den Druckpuls innerhalb eines Motorschrittes bestimmt, zu dem der gewünschte Motorsteuerpuls auftreten soll. Ein dem Zeitpunkt des Motorsteuerpulses bestimmender entsprechender Anfangswert ist in den Zähler 10 zu setzen. Da im angegebenen Ausführungsbeispiel der Zähler 10 aus vier Binärstufen besteht und jede Binärstufe mit einem der ODER-Glieder 13 bis 16 verbunden ist, über welche der Zähler 10 seine Anfangswerte erhält, sind die vier Ausgänge der Wertzuweisungsschaltungen 22 bis 26 jeweils mit einer dieser ODER-Schaltungen 13 bis 16 verbunden. Aus Gründen der Übersichtlichkeit sind die jeweils vier Ausgänge der Wertzuweisungsschaltungen nicht direkt auf jede der ODER-Schaltungen 13 bis 16 geführt, sondern unter Zwischenschaltung eines Satzes von vier ODER-Gliedern 27 bis 30. Die Wirkungsweise einer Wertzuweisung sei anhand folgenden Beispieles erklärt. Während des ersten Schrittes der Abbremsphase wird die Leitung S1 aktiviert. Diese wiederum veranlaßt die Wertzuweisungsschaltung W1 (22) zur Abgabe entsprechender binärer Signale an die vier ODER-Glieder 27 bis 30, deren Ausgänge über die ODER-Glieder 13 bis 16 mit jeweils einer Stufe des Zählers 10 verbunden sind. Mit dem Fortschalten des Zählers 19 von einem zum anderen Motorschritt während der Abbremsphase werden nacheinander die Ausgangleitungen S1 bis S5 des Decoders aktiviert. Entsprechend den Wertzuweisungen werden während eines jeden Motorschrittes vorgegebene Anfangswerte in den Zähler 10 gesetzt. Unter Verzicht auf bessere Übersichtlichkeit wäre es schaltungstechnisch einfacher, die Funktion der ODER-Glieder 27 bis 30 von den ODER-Gliedern 13 bis 16 mit übernehmen zu lassen. Die vierstufigen Binärzähler 10 und 19 wurden — auch wenn sie teilweise kapazitätsmäßig überdimensioniert sind — deshalb verwendet, weil sie als einfacher Baustein im Handel verfügbar sind. Aus Gründen der Übersichtlichkeit wurden Rücksetzleitungen und Steuerleitungen zum Einblenden der Anfangswerte in den Zähler unberücksichtigt gelassen.

Die in Fig. 6 dargestellte Schaltung kann dadurch eine Erweiterung erfahren, daß die Motorsteuerpulse über ein Verzögerungsglied (nicht dargestellt) geleitet werden. Ohne ein solches Verzögerungsglied könnte sich bei einer Geschwindigkeit nahe dem Wert Null beim Auftreten kleinster Motorschwingungen kein neuer Motorsteuerpuls ergeben, weil eben diese Schwingungen den Motor vorzeitig auf die Geschwindigkeit mit dem Wert Null setzen würden. (Beachte: Diese kleinsten Motorschwingungen sind grundsätzlich zu vernachlässigen, mit Ausnahme des Geschwindigkeitsbereiches nahe dem Wert Null.) Mit Hilfe des Verzögerungsgliedes ist es nunmehr möglich, den zuletzt erzeugten Steuerpuls zeitlich in die Zeit der möglichen Motorschwingungen — egal ob diese auftreten oder nicht — zu legen und zur dominierenden Steuergröße zu machen. Auf diese Weise ergäbe sich immer ein klar definierter Motorendschritt. Es sei bemerkt, daß bei Verwendung eines Verzögerungsgliedes bei sämtlichen Phasenwinkelwerten des Systems die Verzögerungszeit dieses Verzögerungsgliedes mit zu berücksichtigen sind.

Das in Fig. 6 gezeigte Ausführungsbeispiel beschränkt sich auf die Abbremsphase des Schrittmotors. Das dabei verfolgte Prinzip einer Schrittoptimierung, d. h. Vorgabe eines Motorsteuerpulses beim Auftreten eines bestimmten Druckpulses innerhalb eines Motorschrittes kann auch auf die Anlauf- bzw. Gleichlaufphase des Motors angewandt werden.

Für die Gleichlaufphase ist durch Vorgabe entsprechender Motorsteuerpulse zum Zeitpunkt des Auftretens bestimmter Druckpulse auf Einhaltung einer annähernd konstanten Motorgeschwindigkeit Einfluß zu nehmen. Außerdem ist es möglich, durch Wahl des Zeitpunktes des Motorsteuerpulses verschiedene Geschwindigkeiten zu erlangen, wie es aus der Darstellung in Fig. 5 für die Kurven A, B und C hervorgeht.

Insbesondere durch den Einsatz von Mikroprozessoren wird es nunmehr ermöglicht, bestimmte theoretisch vorgegebene Geschwindigkeitsprofile zu erzeugen. Die Mikroprozessoren können hierbei den zeitlichen Ablauf der Impulssteuerung des Schrittmotors unter Berücksichtigung der einzelnen Beschleunigungs- und Abbremsphasenwinkel für die einzelnen Motorschritte steuern. Abweichungen von einem vorgegebenen Geschwindigkeitsprofil könnten mit herkömmlichen Mitteln (z. B. durch Zeitmessung zwischen zwei aufeinanderfolgenden Druckpulsen) meßtechnisch erfaßt werden und aufgrund dieser Abweichungen könnte der Mikroprozessor eine entsprechende Nachsteuerung des Schrittmotors in den gewünschten Geschwindigkeitsbereich hinein vornehmen.

**Patentansprüche**

1. Verfahren zur Geschwindigkeitssteuerung eines Schrittmotors, dessen Fortschaltpulse von einer mit ihm bewegbaren Kodierscheibe ableitbar sind, welche entsprechend der Winkelstellung des Rotors gegenüber dem Stator des Motors abtastbare, Abtastsignale liefernde Hauptmarkierungen als Referenzwerte für die Fortschaltpulse aufweist, wobei zur Erreichung einer Abbremsung oder Beschleunigung die Fortschaltpulse den den Hauptmarkierungen entsprechenden Abtastsignalen zeitlich vor- oder nacheilen und zwischen den den Hauptmarkierungen entsprechenden Zeitpunkten liegen dadurch gekennzeichnet, daß die Zeitpunkte für die Fortschaltpulse von Abtastsignalen festgelegt werden, die durch das Abtasten von zwischen den Hauptmarkierungen auf der Kodierscheibe angeordneten diskrete Winkelstellungen des Rotors gegenüber dem Stator des Motors kennzeichnende Zusatzmarkierungen gewonnen werden.

2. Verfahren nach Anspruch 1, dadurch gekennzeichnet, daß diskrete durch die Haupt- und Zusatzmarkierungen festgelegte Winkelstellungen kennzeichnende Werte für einen schwingungsfreien Anlauf- oder Abbremsbereich des Motors empirisch oder algorithmisch bestimmt und programmtechnisch gespeichert werden zur Erzeugung der Fortschaltpulse.

3. Verfahren nach Anspruch 1, dadurch gekennzeichnet, daß diskrete durch Haupt- und Zusatzmarkierungen festgelegte Winkelstellungen kennzeichnende Werte für verschiedene Gleichlaufbereiche des Motors mit jeweils unterschiedlichen vorgegebenen Geschwindigkeiten empirisch oder algorithmisch bestimmt und programmtechnisch gespeichert werden zur Erzeugung der Fortschaltpulse.

4. Anordnung zur Durchführung des Verfahrens nach einem der Ansprüche 1 bis 3, dadurch gekennzeichnet, daß auf der Kodierscheibe (1) zwischen den abtastbaren Abtastsignale liefernde Hauptmarkierungen (MA1, MA2, MA3, ...) als Referenzwerte für die Fortschaltpulse (PA1, PA2, ...) des Schrittmotors eine Anzahl äquidistanter abtastbarer Zusatzmarkierungen (MP2 bis MP8) angeordnet ist, durch deren Abtastsignale die Zeitpunkte des Auftretens der Fortschaltpulse festgelegt sind.

5. Anordnung zur Durchführung des Verfahrens nach einem der Ansprüche 1 bis 3 unter Verwendung einer Codierscheibe gemäß Anspruch 4, gekennzeichnet durch eine Schaltung mit folgenden Merkmalen:

a)  programmierbarer zyklischer Zähler (10), der von den von den Markierungen auf der Codierscheibe abgeleiteten Impulsen (P1 bis P8) taktgetrieben ist und dessen Übertragspulse auf seiner Übertragsleitung (12) die Motor-Steuerpulse darstellen,

b)  zyklischer Zähler (19), der von den Motorsteuerpulsen während eines vorgegebenen Bereiches des Geschwindigkeitsprofils des Schrittmotors taktgetrieben ist, dessen (19) Stufen mit einem Decoder (21) verbunden ist, dessen Ausgangsleitungen (S1 bis S5) nacheinander für die einzelnen Schritte des vorgegebenen Geschwindigkeitsprofilbereiches aktivierbar sind,

c)  jede Ausgangsleitung (S1 bis S5) des Decoders (21) führt auf eine programmierbare Wertzuweisungsschaltung (22 bis 26),

d)  jede Stufe des programmierbaren zyklischen Zählers (10) ist mit den Ausgängen der Wertzuweisungsschaltungen (22 bis 26) bzw. wahlweise mit Steuerleitungen (17, 18) für den Motoranlauf bzw. für die Ableitung von Motor-Steuerpulsen gleichbleibender Winkellage verbunden,

e)  der programmierbare zyklische Zähler (10) erhält für jeden Motorschritt einen solchen Anfangswert, durch den das Auftreten eines Überlaufpulses als Motor-Steuerpuls zum Zeitpunkt der erwünschten Winkellage des Motors sichergestellt ist.

6. Anordnung nach Anspruch 5, dadurch gekennzeichnet, daß die Zähler (10 und 19) Binärzähler sind und den Stufen des Zählers (10) jeweils ein ODER-Glied (13 bis 16) vorgeschaltet ist.

7. Anordnung nach einem der Ansprüche 5 bis 6, dadurch gekennzeichnet, daß die Übertragsleitung (12) des Zählers (10) mit einem Verzögerungsglied zur Abgabe der Motorsteuerpulse verbunden ist.

8. Verfahren nach den Ansprüchen 1 bis 4 bzw. Anordnung nach den Ansprüchen 5 bis 7, gekennzeichnet durch die Verwendung für den Schrittmotorantrieb eines entlang einer Zeile bewegbaren Schreibkopfes von Metallpapierdruckern.

## Claims

1. Method of speed controlling a stepper motor, whose advance pulses are derived from a coding disk moving with said motor and which, according to the angular position of the rotor relative to the motor stator, is provided with sensible first marks supplying sense signals acting as reference values for the advance pulses, wherein for deceleration or acceleration, the advance pulses lead or lag behind the sense signals corresponding to the first marks and occur in between the times corresponding to said marks, characterized in that the times for the advance pulses are determined by sense signals derived by sensing second marks positioned between the first marks on the coding disk and defining discrete angular positions of the rotor relative to the motor stator.

2. Method according to claim 1, characterized in that for starting or decelerating the motor oscillation-free, discrete values, determined by the first and the second marks and defining predetermined angular positions, are empirically or algorithmically computed and stored by program for generating the advance pulses.

3. Method according to claim 1, characterized in that for the different constant speed phases of the motor operated at different predetermined speeds, discrete values, derived from the first and the second marks and defining predetermined angular positions, are empirically or algorithmically computed and stored by program for generating the advance pulses.

4. Apparatus for implementing the method according to any one of the claims 1 to 3, characterized in that the coding disk (1) between the sensible first marks (MA$_1$, MA$_2$, MA$_3$ ...), supplying sense signals acting as reference values for the advance pulses (PA$_1$, PA$_2$ ...) of the stepper motor, is provided with a number of equidistant sensible second marks (MP$_2$ to MP$_8$), whose sense signals determine the times of occurrence of the advance pulses.

5. Apparatus for implementing the method according to any one of the claims 1 to 3, using a coding disk according to claim 4, characterized by a circuit with the following features:

a)  a programmable cyclic counter (10) which is clock-driven by the pulses (P1 to P8) derived from the marks on the coding disk and the carry pulses of which on its carry line (12) represent the motor control pulses,

b)  a cyclic counter (19) clock-driven by the motor control pulses for a given range of the speed profile of the stepper motor and whose stages are connected to a decoder (21), the output lines (S1 to S5) of which are successively activated for the individual steps of the given speed profile range,

c)  each output line (S1 to S5) of the decoder (21) is connected to a programmable value assignment circuit (22 to 26),

d)  each stage of the programmable cyclic counter (10) is connected to the outputs of the value assignment circuits (22 to 26) or optionally to control lines (17, 18) for respectively starting the motor and deriving equiangular motor control pulses,

e)  the programmable cyclic counter (10) receives for each motor step an initial value which is such that it ensures the occurrence of an overflow pulse acting as a motor control pulse at the time at which the motor has the desired angular position.

6. Apparatus according to claim 5, characterized in that the counters (10 and 19) are binary counters and the stages of the counter (10) are preceded by one OR gate (13 to 16) each.

7. Apparatus according to any one of the claims 5 to 6, characterized in that the carry line (12) of the counter (10) is connected to a delay element for emitting the motor control pulses.

8. Method according to any one of the claims 1 to 4 and apparatus according to claims 5 to 7, respectively, characterized by their use for the stepper motor drive of a metal paper printer print head moving along a line.

## Revendications

1. Procédé permettant de commander la vitesse d'un motuer pas-à-pas dont les impulsions d'avance tirent leur origine d'un disque codé qui se déplace avec le moteur pas-à-pas, disque sur lequel sont imprimées des marques principales qui, en fonction de la position angulaire du rotor par rapport au stator du moteur, délivrent des signaux de détection faisant fonction de valeurs de référence pour les impulsions d'avance, où les impulsions d'avance, précédent ou suivent les signaux de détection correspondant aux marques principales et se produisent dans les intervalles de temps entre les marques principales, afin d'obtenir une accélération ou une décélération, caractérisé en ce que le déclenchement dans le temps desdites impulsions d'avance, d'accélération ou de ralentissement est déterminé par des signaux de détection délivrés lors de la détection de marques secondaires situées entre les marques principales imprimées sur le disque codé caractérisant des positions angulaires discrètes du rotor par rapport au stator.

2. Procédé selon la revendication 1 caractérisé en ce que pour démarer ou décélèrer le moteur sans oscillations, des valeurs discrètes par les marques principales et seconde et caractérisant des positions angulaires déterminées sont calculées selon une méthode empirique ou algorithmique et mémorisée par programme afin de générer les impulsions d'avance.

3. Procédé selon la revendication 1, caractérisé en ce que pour les différentes phases à vitesse constante du moteur actionné à plusieurs vitesses prédéterminées différentes, des valeurs discrètes dérivées des marques principales et secondaires et définissant des positions angulaires prédéterminées sont calculées selon une méthode empirique ou algorithmique et mémorisées par programme afin de générer les impulsions d'avance.

4. Dispositif de mise en oeuvre du procédé selon l'une quelconque des revendications 1 à 3, caractérisé en ce que le disque codé (1) comporte, entre les marques (MA$_1$, MA$_2$, MA$_3$, ...), délivrant des signaux de détection servant de valeurs de référence aux impulsions d'avancement (PA$_1$, PA$_2$, ...) du moteur pas-à-pas, un certain nombre de marques secondaires (MP$_2$ à MP$_8$) équidistantes qui délivrent des signaux de détection déterminant l'apparition dans le temps des impulsions d'avance.

5. Dispositif de mise en oeuvre du procédé selon l'une quelconque des revendications 1 à 3, qui utilise un disque codé selon la revendication 4, caractérisé par un circuit comportant les éléments suivants:

a) un compteur cyclique programmable (10) commandé par les impulsions (P1 à P8) dérivées des marques imprimées sur ledit disque codé, et dont les impulsions de report présentes sur sa ligne de report (12) représentent les impulsions de commande du moteur,

b) un compteur cyclique (19) commandé par lesdites impulsions de commande du moteur pendant un intervalle prédéterminé du diagramme de vitesse du moteur pas-à-pas et dont les étages sont connectés à un décodeur (21) dont les lignes de sortie (S1 à S5) sont activées les unes après les autres pour les différents pas dudit intervalle prédéterminé du diagramme de vitesse.

c) chaque ligne de sortie (S1 à S5) du décodeur (21) est convertie à un circuit d'affectation de valeur programmable (22 à 26),

d) chaque étage du compteur cyclique programmable (10) est connecté aux sorties desdits circuits d'affectation de valeur (22 à 26) ou optionnellement aux lignes de commande (17 à 18) afin d'assurer le démarrage du moteur et à dériver des impulsions de commande du moteur équiangulaires, respectivement,

e) le compteur cyclique programmable (10) reçoit pour chaque pas du moteur une valeur initiale telle qu'elle commande l'apparition d'une impulsion de dépassement faisant fonction d'impulsion de commande du moteur lorsque la position angulaire souhaitée est atteinte.

6. Dispositif selon la revendication 5, caractérisé en ce que lesdits compteurs (10 et 19) sont des compteurs binaires et en ce qu'un élément OU (13 à 16) est disposé en amont de chaque étage du compteur (10).

7. Dispositif selon l'une quelconque des revendications 5 à 6, caractérisé en ce que la ligne de report (12) du compteur (10) est connectée à un élément à retard qui délivre lesdites impulsions de commande du moteur.

8. Procédé selon l'une des revendications 1 à 4 et dispositif selon les revendications 5 à 7 respectivement caractérisé en ce qu'on les utilise, pour l'entraînement par un moteur pas-à-pas d'une tête d'impression d'imprimante à papier métalisé qui se déplace le long d'une ligne.

FIG. 1

FIG. 2

SPANNUNG

PA 1

PA 2

ZEIT

**FIG. 3A**

SPANNUNG

PD

TD

ZEIT

**FIG. 3B**

SPANNUNG

PS 1

TD

ZEIT

**FIG. 3C**

SPANNUNG

PA1
P 1    P 2    P 3    P 4    P 5    P 6    P 7    P 8    PA 2
                                                       P 1

PHASENWINKEL

**FIG. 4A**

SPANNUNG

PS 2

PHASENWINKEL

**FIG. 4B**

13

**GESCHWINDIGKEIT**

A  B  C

Z

In 1  In 2  In 3  WEG

## FIG. 5

DRUCKPULSE  TAKT  | ZYKL. ZÄHLER  (8) ; (4) ; 2 ; (1) |  ÜBERTRAG  MOTOR-STEUERPULSE

11  10  12  31

13  14  15  16

N≥1  N≥1  N≥1  N≥1

MOTORSTARTSIGNAL  17

18

ZUR ERZEUGUNG ALLER STEUERPULSE (MIT AUSNAHME DES DURCH DAS MOTOR-STARTSIGNAL BEDINGTEN STEUERPULSES) BIS ZUM ERREICHEN DER ABBREMSPHASE

S5  26  W5  N≥1  30

S4  25  W4  N≥1  29

S3  24  W3  N≥1  28

S2  23  W2  N≥1  27

21  DECODER

22  W1

20  19  S1

DURCH ZÄHLUNG BESTIMMTER BEGINN DER ABBREMSPHASE  32  &  ZÄHLER  (8) ; (4) ; (2) ; (1)

26-1  25-1  24-1  23-1  22-1

PROGRAMMIERBARE WERTZUWEISUNG

33

## FIG. 6